# EUROPÄISCHE PATENTSCHRIFT

(11) **EP 1 674 492 B1**
(45) Veröffentlichungstag und Bekanntmachung des Hinweises auf die Patenterteilung: **27.05.2009**
(21) Anmeldenummer: 05112790.0
(22) Anmeldetag: 22.12.2005
(51) Int. Cl.: C08G 18/10, C08G 18/12, C08G 18/40

(54) **Isocyanatprepolymer für 1-Komponenten-Polyurethanschaumsysteme**
Isocyanate prepolymer for one-component polyurethane foam compositions
Prépolymère d'isocyanate pour systèmes monocomposants pour mousse de polyurethanne

(30) Priorität: 22.12.2004 DE 102004063001
(43) Veröffentlichungstag der Anmeldung: 28.06.2006
(73) Patentinhaber: BASF SE, 67056 Ludwigshafen (DE)
(72) Erfinder: Reese, Hans-Jürgen, 49401, Damme (DE); Wind, Michael, 32689, Kalletal (DE); Murrar, Imbridt, 01968, Senftenberg (DE); Pohl, Wolfgang, 80797, München (DE); Krawczyk, Sylvia, 49356, Diepholz (DE)

(56) Entgegenhaltungen:
- EP-A- 1 571 167
- DE-A1- 4 441 696
- DE-A1- 19 509 819
- DE-A1- 19 731 680

## Beschreibung

Die Erfindung betrifft Isocyanatprepolymere gemäß Anspruch 1 auf Basis einer Polyolzusammensetzung, erhältlich durch Umsetzung von (i) einer Polyolkomponente mit (ii) Polyisocyanaten, bevorzugt Diisocyanaten, wobei bei dieser Umsetzung das Verhältnis von Hydroxygruppen der Komponente (i) zu Isocyanatgruppen der Komponente (ii) mehr als 2 zu 1 beträgt, so dass die resultierende Polyolzusammensetzung Polyole und Hydroxyprepolymere enthält. Die Erfindung betrifft ferner ein Verfahren zur deren Herstellung und deren Verwendung als 1-Komponenten-Polyurethanschaumsysteme. Ferner betrifft die Erfindung Druckbehälter, enthaltend die erfindungsgemäßen Isocyanatprepolymere.

Einkomponentenschäume aus Aerosolbehältern sind im Bereich des Bauwesens häufig angewandte Montagemittel zum Einbau von Fenstern und Türen in Bauwerken sowie als Füllmaterial für bautechnisch bedingte Hohlräume oder Mauerdurchbrüche für Rohrinstallationen. Ein solcher Aerosolbehälter beinhaltet üblicherweise ein Polyurethanprepolymer sowie Treibmittel und Zusätze. Durch Austragen seines Inhaltes mittels Treibmittel, seinem Aufschäumen durch Frothwirkung und durch seine Aushärtung mit Luftfeuchtigkeit, entsteht der gewünschte Schaumstoff.

Einkomponentenschäume auf der Basis von NCO-haltigen Prepolymeren sind die bekanntesten Schäume dieser Art. Es gibt hierbei unterschiedliche Produkte, die je nach Zusammensetzung zu harten bis weich elastischen Schäumen führen.

Beispielsweise sind elastische Schaumstoffe in DE-A-101 08 445 beschrieben. Die offenbarten Prepolymere enthalten jedoch erhebliche Mengen an monomeren lsocyanat. Damit besteht während des Schäumprozesses ein gewisses Gefährdungspotential durch atembares Isocyanat.

Bekannt sind bei 1-Komponenten-Polyurethanschaumsysteme aber auch Formulierungen mit deutlich reduzierten Gehalten an freien monomeren Isocyanaten. So beschreibt beispielsweise DE-A-4441696 die Verwendung von handelsüblichem Polymer-MDI, aus welchem durch Destillation bei Temperaturen über 160°C und unter verminderten Druckbedingungen das monomere MDI teilweise entfernt und das übrigbleibende Sumpfprodukt als Isocyanatkomponente zur Herstellung eines 1 K-PUR-Montageschaumes verwendet wird.

Nachteilig ist hier, dass der gewählte Lösungsweg zu monomerarmen Isocyanat mit noch technischen Mängeln insbesondere zu erhöhten Viskositäten und außerdem zu hohen Restmonomergehalten führt. Der beschriebene Aerosolschaum auf Basis dieses relativ monomerarmen Polymer-MDI's weist unzureichende Eigenschaften auf bedingt durch dieses Isocyanat, welcher in einer Vorstufe noch prepolymerisiert wird. Ferner führen die offenbarten, monomerarmen Polyisocyanate, bedingt durch die erhöhte Funktionalität des monomerarmen Polymer-MDI's, im wesentlichen zu harten Schaumstoffen. Werden solche Schaumstoffe in der Anwendung im Bauwesen dynamischen Belastungen ausgesetzt, so weisen solche Schaumstoffe häufig Mängel durch fehlende Elastizität auf.

Aufgabe der Erfindung war es, die im Stand der Technik genannten Nachteile zu überwinden. Das heißt, es war Aufgabe der Erfindung, ein 1-Komponenten-Polyurethansystem oder einzelne Bestandteile davon bereit zu stellen, das zu einer Elastifizierung und zu einem damit verbundenen verbesserten Schäumverhalten gegenüber den aus dem Stand der Technik bekannten 1-Komponenten-Polyurethansystemen führt. Insbesondere war es Aufgabe der vorliegenden Erfindung, ein 1-Komponenten-Polyurethansystem, oder einzelne Bestandteile davon, bereit zu stellen, die einerseits mit geringen gesundheitlichen Risiken gehandhabt werden können und andererseits zu einem Schaumstoff mit vorteilhaften Eigenschaften, insbesondere vorteilhafter Elastizität, führen.

Aufgabe der Erfindung war es ferner, ein 1-Komponenten-Polyurethansystem bereit zu stellen, welches in einem Druckbehälter lagerstabil ist. Weiterhin sollte der ausgehärtete Schaumstoff möglichst nicht schrumpfen, sich durch verbesserte Elastizität und verbessertes Dehnverhalten auszeichnen, Montagefähigkeit besitzen, und gutes Froth-Verhalten zeigen. Ein Ziel der Erfindung war es außerdem, dass diese Eigenschaften über einen längeren Zeitraum erhalten bleiben.

Die Aufgaben konnten durch Bereitstellung eines neuen Isocyanatprepolymers, welche zur Herstellung von Einkomponenten-Polyurethansystemen besonders geeignet ist, gelöst werden; denn daraus sind Schaumstoffe mit den gewünschten Eigenschaften, zum Beispiel mit elastischem Verhalten und gutem Froth-Verhalten erhältlich.

Gegenstand der Erfindung ist somit ein Isocyanatprepolymer gemäß Anspruch 1.

Ferner ist Gegenstand der Erfindung die Verwendung dieses lsocyanatprepolymers zur Herstellung eines 1-Komponenten-Polyurethanschaumsystems.

Weiterhin ist Gegenstand der Erfindung ein Verfahren zur Herstellung eines Isocyanatprepolymers durch Vermischen einer Polyolzusammensetzung, erhältlich durch Umsetzung von
(i) einer Polyolkomponente mit
(ii) Polyisocyanaten, bevorzugt Diisocyanaten,
wobei bei dieser Umsetzung das Verhältnis von Hydroxygruppen der Komponente (i) zu Isocyanatgruppen der Komponente (ii) mehr als 2 zu 1 beträgt, mit monomerarmen PMDI (iv) mit einem 2 Kern-Gehalt von weniger als 1,0 Gew.-%.

Schließlich ist Gegenstand der Erfindung ein Druckbehälter, enthaltend ein 1-Komponentenschaumsystem, das
(a) lsocyanatprepolymere nach einem der Ansprüche 1 bis 6 und und gegebenenfalls
(b) Verdünnungsmittel und/oder
(c) Flüssiggas, enthält.

Die Polyolzusammensetzung ist erhältlich durch Umsetzung einer Polyolkomponente (i) mit Polyisocyanaten, bevorzugt Diisocyanaten (ii).

Als Polyolkomponente (i) kommen grundsätzlich alle gegenüber Isocyanaten reaktive Verbindungen in Betracht, insbesondere die allgemein bekannte Polyhydroxylverbindungen. Bevorzugt werden Polyhydroxylverbindungen als Komponente (i) eingesetzt, die eine Funktionalität von 1,9 bis 5, besonders bevorzugt von 2 bis 3 und ein zahlenmittleres Molekulargewicht von 60 bis 6000, besonders bevorzugt 500 bis 5500, insbesondere 800 bis 5000 g/mol aufweisen. Unter Funktionalität ist hierbei die "theoretische OH-Funktionalität" zu verstehen, die sich aus der Funktionalität der verwendeten Startermoleküle ergibt.

Bevorzugt werden als Komponente (i) Polyetherpolyole (i-a) und/oder Polyesterpolyalkohole (i-b) eingesetzt. In Betracht kommen jedoch auch andere hydroxylgruppenhaltige Polymere, beispielsweise Polyesteramide, Polyacetale.

Sofern Polyetherpolyole (i-a) eingesetzt werden, so können diese im allgemeinen nach bekannten Verfahren, beispielsweise durch anionische Polymerisation mit Alkalihydroxiden, wie Natrium- oder Kaliumhydroxid oder Alkalialkoholaten, wie Natriummethylat, Natrium- oder Kaliumethylat oder Kaliumisopropylat als Katalysatoren und unter Zusatz mindestens eines Startermoleküls, das 2 bis 4 reaktive Wasserstoffatome gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden, ausgewählt aus Propylenoxid (PO) und Ethylenoxid (EO), hergestellt werden.

Als Polyetherpolyole (i-a) können weiterhin sogenannte niedrig ungesättigte Polyetherpolyole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden. Derartige Polyetheralkohole werden durch Anlagerung von Ethylenoxid und/oder Propylenoxid und Mischungen daraus, an mindestens difunktionelle Alkohole in Gegenwart von sogenannten Doppelmetallcyanidkatalysatoren hergestellt.

Die Alkylenoxide können einzeln, alternierend nacheinander oder als Mischungen verwendet werden. Der Einsatz eines EO/PO-Gemisches führt zu einem Polyetherpolyol mit statistischer PO/EO-Einheiten-Verteilung. Es ist möglich, zunächst ein PO/EO-Gemisch einzusetzen und dann vor Abbruch der Polymerisation nur noch PO oder EO zu verwenden, dann erhält man ein Polyetherpolyol mit PO- bzw. EO-Endcap.

Als Startermoleküle kommen beispielsweise in Betracht: Wasser, organische Dicarbonsäuren, Diamine, wie z.B. gegebenenfalls mono- und dialkylsubstituiertes Ethylendiamin, Diethylentriamin, Triethylentetramin, 1,3-Propylendiamin, und/oder 1,3- bzw. 1,4-Butylendiamin. Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl- und N-Ethyldiethanolamin und Trialkanolamine wie z.B. Triethanolamin und Ammoniak. Weiterhin eingesetzt werden als Startermoleküle zwei-, dreiwertige oder vierwertige Alkohole, wie Ethandiol, Propandiol-1,2 und -1,3, Diethylenglykol, Dipropylenglykol, Butandiol-1,4, Hexandiol-1,6, Glycerin und/oder Pentaerythrit.

Die Polyetherpolyole liegen einzeln oder in Form eines Gemisches aus zwei oder mehr der vorstehend genannten Polyetherpolyolen vor.

Geeignete Polyesterpolyole (i-b) können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, und aromatische Dicarbonsäuren, wie Phthalsäure, und Terephthalsäure. Die Dicarbonsäuren können einzeln oder als Gemische verwendet werden.

Beispiele für zweiwertige Alkohole sind Glykole mit 2 bis 16 Kohlenstoffatomen, vorzugsweise 2 bis 6 Kohlenstoffatome, wie z.B. Ethylenglykol, Diethylenglykol, Butandiol-1,4, Pentandiol-1,5, Hexandiol-1,6. Je nach den gewünschten Eigenschaften können die zweiwertigen Alkohole allein oder gegebenenfalls in Mischungen untereinander verwendet werden.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit ε-Caprolacton gebildete Polykondensate.

In einer bevorzugten Ausführungsform enthält die Polyolkomponente (i) die Bestandteile Polyetherpolyole (i-a) und Polyesterpolyole(i-b). Die Bestandteile (i-a) und (i-b) liegen bevorzugt in einem Mengenverhältnis vor, so dass die beiden Bestandteile untereinander unverträglich sind. Mehr bevorzugt liegen die beiden Bestandteile in einem Verhältnis von 10 : 90 bis 90 : 10, besonders bevorzugt in einem Verhältnis 20 : 80 bis 60 : 40 vor.

Bei den für die Polyolzusammensetzung und für das erfindungsgemäße Verfahren verwendeten Polyisocyanaten (ii) handelt es sich um auf dem Polyurethangebiet übliche Isocyanate. In Betracht kommen im allgemeinen aliphatische, cycloaliphatische, arylaliphatische und aromatische mehrwertige Isocyanate. Bevorzugt werden die technisch gut zugänglichen, gegebenenfalls zusätzlich Urethangruppen aufweisenden, aromatischen Di- und Polyisocyanate wie 2,4- und 2,6-Toluylendiisocyanat, sowie beliebige Gemische dieser Isomeren, 2,2'- und 2,4'- und 4,4'-Diphenylmethan-diisocyanat sowie beliebige Gemische dieser Isomeren, Mischungen aus 2,2'-2,4'-, 4,4'-Diphenylmethan-diisocyanaten und Polyphenyl-polymethylen-polyisocyanaten (Roh-MDI) und Gemische aus Toluylen-diisocyanaten und Roh-MDI.

Bevorzugt werden als Komponente (ii) Diisocyanate verwendet, bevorzugt 2,4- und 2,6-Toluylendiisocyanat, sowie beliebige Gemische dieser Isomeren, und 2,2'- und 2,4'- und 4,4'-Diphenylmethan-düsocyanat. Insbesondere wird 4,4'-Diphenylmethandiisocyanat, bevorzugt in verflüssigter Form, verwendet.

Die Polyisocyanate (ii) können auch in Form von Polyisocyanatprepolymeren eingesetzt werden. Insbesondere werden Diisocyanate (ii) in Form von Polyisocyanatprepolymeren eingesetzt. Diese Prepolymere sind im Stand der Technik bekannt. Die Herstellung erfolgt auf an sich bekannte Weise, indem vorstehend beschriebene Di- oder Polyisocyanate (ii), beispielsweise bei Temperaturen von etwa 80°C, mit Polyolen zu einem NCO-Prepolymer umgesetzt werden. Als Polyole sind bevorzugt die vorstehend unter der Komponente (i) beschriebenen Verbindungen geeignet. Das Polyol-Polyisocyanat-Verhältnis wird im allgemeinen so gewählt, dass der NCO-Gehalt des Prepolymeren 8 bis 25 Gew.-%, vorzugsweise 10 bis 24 Gew.-%, besonders bevorzugt 13 bis 23 Gew.-% beträgt.

Bei der Umsetzung zur Polyolzusammensetzung wird eine Polyolkomponente (i) verwendet, die OH-Gruppen aufweist. Diese wird mit einer NCO-Gruppen aufweisenden Polyisocyanatkomponente (ii) zur Reaktion gebracht. Es ist hierbei wichtig, dass der bei dieser Umsetzung das Verhältnis von Hydroxygruppen der Komponente (i) zu Isocyanatgruppen der Komponente (ii) mehr als 2 zu 1 beträgt; das heißt, Hydroxylgruppen sind im Überschuss vorhanden. Bevorzugt beträgt das Verhältnis von Hydroxygruppen der Komponente (i) zu Isocyanatgruppen der Komponente (ii) 20 bis 2,1 zu 1 (= 20 bis 2,1 : 1), besonders bevorzugt 15 bis 2,2 : 1, insbesondere 10 zu 2,5 :1.

Bei dieser Umsetzung reagieren die Polyisocyanate (ii) mit den (durch die Wahl des vorstehend genannten Umsetzungsverhältnisses) im Überschuss vorhandenen Polyolen (i) zu sogenannten "OH-Prepolymeren". Die resultierende, Polyolzusammensetzung enthält somit die Bestandteile:
α) Polyole (i) (und zwar solche, die nicht mit NCO-Gruppen abreagiert haben) und
β) OH-Prepolymere.

In einer weiteren bevorzugten Ausführungsform werden nach Abschluss der Umsetzung der vorstehend beschriebenen Polyolkomponente (i) mit den nachstehend beschriebenen Polyisocyanaten (ii) als weiterer Bestandteil Kettenregler (iii) der Polyolzusammensetzung zugefügt.

Die Kettenregler (iii) werden üblicherweise in einer Menge von 0,01 bis 10 Gew.-%, bevorzugt von 2 bis 9 Gew.-%, bezogen auf das Gesamtgewicht der Polyolzusammensetzung, verwendet.

Als Kettenregler geeignet sind Verbindungen, die lediglich eine gegenüber lsocyanaten reaktive funktionelle Gruppe aufweisen, wie z. B. monofunktionelle Alkohole, monofunktionelle Amine und/oder monofunktionelle Polyole. Im allgemeinen weisen die verwendeten Kettenregler ein Molekulargewicht von 30 bis 500 g/mol auf. Bevorzugt werden monofunktionelle Alkohole (auch als Monoole bezeichnet) als Kettenregler verwendet. Beispiele hierfür sind Diacetonalkohol oder ein alkoxylierter Fettalkohol.

Sofern Kettenregler (iii) verwendet werden enthält folglich die resultierende, Polyolzusammensetzung die Bestandteile:
α) Polyole (i) (und zwar solche, die nicht mit NCO-Gruppen abreagiert haben),
β) OH-Prepolymere und
χ) Kettenregler (iii).

In einer bevorzugten Ausführungsform liegen die Bestanteile in folgenden Mengen, bezogen auf das Gesamtgewicht der Polyolzusammensetzung, vor:
α) Polyole (i) in einer Menge von 15 bis 90 Gew.-%, bevorzugt von 30 bis 80 Gew.-%,
β) OH-Prepolymere in einer Menge von 5 bis 80 Gew.-%, bevorzugt von 15 bis 70 Gew.-%, und
χ) Kettenregler (iii) in einer Menge von 0,01 bis 10 Gew.-%, bevorzugt von 2 bis 9 Gew.-%.

In einer bevorzugten Ausführungsform werden die Bestandteile der Polyolzusammensetzung so gewählt, dass sie eine Viskosität nach DIN 53018 von 500 bis 50000 mPas, bevorzugt 1000 bis 20000, insbesondere von 1500 bis 15000 mPas, gemessen bei 25°C, aufweist.

Sofern die Viskosität der Polyolzusammensetzung über 5000 mPas beträgt, wird zur Herstellung des 1-Komponenten-Polyurethansystems bevorzugt so viel nachstehend beschriebenes Verdünnungsmittel (b) zugegeben, dass die Viskosität unter 5000 mPas, gemessen bei 25°C, sinkt.

Die Herstellung der Polyolzusammensetzung erfolgt durch Umsetzung von
(i) einer Polyolkomponente mit
(ii) Polyisocyanaten, bevorzugt Diisocyanaten,
wobei bei dieser Umsetzung das Verhältnis von Hydroxygruppen der Komponente (i) zu Isocyanatgruppen der Komponente (ii) mehr als 2 zu 1 beträgt.

Im allgemeinen werden bei diesem Verfahren zunächst die Polyole (i) vorgelegt und anschließend die Polyisocyanate (ii), bevorzugt unter Rühren, zugeführt. Sofern die Polyole (i) ein Gemisch aus untereinander unverträglichen Polyolen enthält, so wird bei dem Verfahren die Menge an Polyisocyanaten so gewählt, dass im resultierenden Produkt keine Phasentrennung mehr vorliegt. Sofern Kettenregler (iii) mitverwendet werden, so erfolgt bevorzugt die obige Umsetzung zuerst ohne diese Kettenregler (iii). Nach erfolgter Synthese werden diese dem Reaktionsprodukt wieder zugesetzt.

Zu bevorzugten Ausführungsformen der verwendeten Komponenten (i), (ii) und (iii) finden die vorstehend getroffenen Aussagen auch Anwendung für das hier beschriebene Verfahren und die nachstehend beschriebenen, weiteren Gegenständer der vorliegenden Erfindung.

Durch Umsetzung der Polyolzusammensetzung mit monomerarmen PMDI (iv) erhält man das erfindungsgemäße Polyisocyanatprepolymer. Die Umsetzung erfolgt, bevorzugt in einem entsprechenden Druckbehälter, gegebenenfalls in Gegenwart von Flüssiggasen und Verdünnungsmittel. Das erfindungsgemäße Polyisocyanatprepolymer weist im allgemeinen einen NCO-Gehalt von 0,1 bis 25 Gew.-%, vorzugsweise 8 bis 18 Gew.-%, besonders bevorzugt 9 bis 16 Gew.-% auf.

Das PMDI (iv) weist eine NCO-Funktionalität von größer als 2 auf, mehr bevorzugt weist es eine NCO-Funktionalität von 2,1 bis 6, besonders bevorzugt von 2,5 bis 5, insbesondere von 2,9 bis 4 auf.

In einer bevorzugten Ausführungsform ist das Polyisocyanat (ii) nicht identisch mit dem Polyisocyanat (iv). Das Polyisocyanat (ii) weist bevorzugt eine NCO-Funktionalität von zwei auf, d.h. es handelt sich um ein Disocyanat oder ein darauf basierendes lineares NCO-Prepolymere. Im Gegensatz dazu weist das PMDI (iv) wie vorstehend erläutert eine NCO-Funktionalität von größer als zwei auf.

Im Rahmen dieser Erfindung wird unter "PMDI" Polymethylenpolyphenylen-polyisocyanat verstanden, d.h. PMDI ist ein Gemisch, enthaltend Methylendiphenyldiisocyanat (üblicherweise im Fachgebiet als MDI oder auch als monomeres MDI bezeichnet) und höherkondensierte Homologe von Methylendiphenyldiisocyanat. Somit ist PMDI ist ein Gemisch von Isocyanaten mit zwei und mehr aromatischen Kernen und NCO-Gruppen.

PMDI wird üblicherweise im Fachgebiet durch Phosgenierung eines Gemisches von Isomeren und Homologen des Diamino-diphenylmethans (MDA), welches durch Kondensation von Anilin und Formaldehyd erhältlich ist, hergestellt. Die Homologen bilden sich dadurch, dass die Kondensation nicht beim Zweikern-Produkt stehen bleibt, sondern in abnehmender Menge zu den drei- und höherkernigen Produkten weiterführt.

Unter "monomerarmes PMDI" wird im Rahmen dieser Erfindung ein PMDI verstanden, dass einen geringen Anteil an monomeren MDI aufweist. Es weist einen 2-Kern-Gehalt (d.h. eine Gehalt an Methylendiphenyldiisocyanat) von weniger als 1,0 Gew.-%, bevorzugt von weniger als 0,5 Gew.-%, bezogen auf das Gesamtgewicht des PMD1s, auf.

In einer bevorzugten Ausführungsform handelt es sich bei dem verwendeten monomerarmen PMDI (iv) um ein Gemisch, enthaltend
weniger als 1,0 Gew.-% 2-Kern-Methylendiphenyldiisocyanat (MDI), und
20 - 40 Gew.-% 3-Kern-MDI,
10 - 30 Gew.-% 4-Kern-MDI und
35 - 60 Gew.-% 5-Kern- und höherkerniges MDI.

Bei dem Gemisch dieser Ausführungsform handelt es sich um ein PMDI-Gemisch, bei welchem nach der Umsetzung mit der Polyolzusammensetzung keine Gefahrenkennzeichnung aufgrund des geringen 2-Kern-MDI-Anteils notwendig ist, da dieser kleiner als 0,1 Gew.-% ist.

Das monomerarme PMDI-Gemisch (iv) weist im allgemeinen eine Viskosität bei 25°C von 3 bis 150 Pas (Pascal-Sekunde) und bei 50°C von 100 bis 7000 mPas, bevorzugt eine Viskosität bei 25°C von 10 bis 100 Pas und bei 50°C von 300 bis 5000 mPas, besonders bevorzugt eine Viskosität bei 25°C von 12 bis 60 Pas und bei 50°C von 500 bis 4000 mPas auf, wobei die Viskosität nach DIN 53018 bestimmt wurde.

Des Weiteren weist das verwendete, monomerarme PMDI (iv) bevorzugt eine Funktionalität von 3 bis 5, mehr bevorzugt eine Funktionalität von 3,8 bis 4,4, besonders bevorzugt eine Funktionalität von 3,9 bis 4,3 auf.

Der NCO-Gehalt des verwendeten monomerarmen PMDls (iv) beträgt im allgemeinen 27 bis 33 Gew.-%, bevorzugt 28 bis 32,5 Gew.-%.

Das verwendete, monomerarme PMDI (iv) ist beispielsweise durch ein Verfahren erhältlich, wobei
a) ein PMDI-Gemisch, bevorzugt umfassend
   35 ± 17 Gew.-% 2-Kern-Methylendiphenyldiisocyanat (MDI),
   26 ± 6 Gew.-% 3-Kern-MDI,
   12 ± 4 Gew.-% 4-Kern-MDI,
   5 ± 3 Gew.-% 5-Kern-MDI,
   23 ± 10 Gew.-% 6-Kern- und höherkerniges MDI,
   bereitgestellt wird und anschließend
b) das PMDI-Gemisch einem destillativen Trennverfahren unterworfen wird, wobei die Verdampfungstemperatur bevorzugt weniger als 160 ° Celsius beträgt.

In dem vorstehend beschriebenen Verfahren beträgt der Druck in der Trennvorrichtung üblicherweise 0,001 mbar bis 10 mbar, bevorzugt 0,01 mbar bis 1 mbar. Ferner beträgt die durchschnittliche Verweilzeit des zu trennenden Gemisches in der Trennvorrichtung beispielsweise 30 bis 1800 Sekunden, bevorzugt 50 bis 1600 Sekunden.

Das erfindungsgemäße Prepolymer kann abgesehen von den vorstehend beschriebenen Bestandteilen ferner noch Zusatzstoffe enthalten. Als Zusatzstoffe können beispielsweise allgemein bekannte oberflächenaktive Substanzen, Schaumstabilisatoren, z.B. Siloxan-oxyalkylen-copolymere, Zellregler, Füllstoffe, Flammschutzmittel, Keimbildungsmittel, Oxidationsverzögerer, Stabilisatoren, Farbstoffe und Pigmente, Inhibitoren, Stabilisatoren gegen Hydrolyse, Licht, Hitze oder Verfärbung, Farbstoffe, anorganische und/oder organische Füllstoffe, Verstärkungsmittel und/oder Weichmacher verwendet werden.

Bevorzugt werden Schaumstabilisatoren, z.B. Siloxan-oxyalkylen-copolymere und Katalysatoren als Zusatzstoffe verwendet. Sie werden im allgemeinen in einer Menge von 0,2 bis 5,0, bevorzugt von 0,3 bis 3,0, bezogen auf das Gesamtgewicht des Isocyanatprepolymers, eingesetzt.

Gegenstand der Erfindung ist weiterhin ein Verfahren zur Herstellung des erfindungsgemäßen Isocyanatprepolymers durch Vermischen der Polyolzusammensetzung (diese ist wie vorstehend beschrieben erhältlich durch Umsetzung von einer Polyolkomponente (i) mit Polyisocyanaten(ii), wobei bei dieser Umsetzung das Verhältnis von Hydroxygruppen der Komponente (i) zu Isocyanatgruppen der Komponente (ii) mehr als 2 zu 1 beträgt) mit monomerarmen PMDI (iv).

Bei diesem erfindungsgemäßen Verfahren werden im allgemeinen die Polyolzusammensetzung und PMDI (iv) bevorzugt durch Einzeldosierung in einen Druckbehälter unter Hinzufügung von Flüssiggasen und nachfolgendem intensiven Schütteln zusammengeführt. Die Umsetzung erfolgt bevorzugt unter leichter Erwärmung des Druckbehälters, beispielsweise bei Temperaturen von etwa 20°C bis maximal 50°C. Das Verhältnis von Polyolzusammensetzung zu Polyisocyanaten (iv) wird im allgemeinen so gewählt, dass der NCO-Gehalt des resultierenden, erfindungsgemäßen Isocyanatprepolymers 0,1 bis 25 Gew.-%, vorzugsweise 8 bis 18 Gew.-%, besonders bevorzugt 9 bis 16 Gew.-% beträgt.

Das erfindungsgemäße Polyisocyanatprepolymer kann zur Herstellung eines 1-Komponenten-Polyurethanschaumsystem verwendet werden. Diese 1-Komponenten-Polyurethanschaumsystem wird beispielsweise zur Herstellung von Füll- und Montageschaum im Bauwesen und im Handwerk verwendet. So können beispielsweise mit dem 1-Komponenten-Polyurethanschaumsystem hergestellte Schaumstoffe als Füllmaterial für bautechnisch bedingte Hohlräume oder Mauerdurchbrüche, z.B. bei Rohrinstallationen oder als Material zur Wärmedämmung eingesetzt werden.

Gegenstand der Erfindung ist somit ein Druckbehälter, enthaltend ein 1-Komponenten-Polyurethanschaumsystems, wobei dieses Schaumsystem die erfindungsgemäßen isocyanatprepolymere (a) enthält. Es ist ferner bevorzugt, dass das 1-Komponenten-Polyurethanschaumsystems zusätzlich Verdünnungsmittel (b) und/oder Flüssiggas (c) enthält.

Als Verdünnungsmittel (b) sind im allgemeinen flüssige nichtreaktive Verbindungen geeignet, die bevorzugt niederviskos sind. Bevorzugt werden flüssige Flammschutzmittel wie Triethylphosphat oder Trichlorpropylphosphat verwendet. Unter niederviskos wird in diesem Zusammenhang eine Viskosität von 5 bis 200 mPas bei 25°C, gemessen nach DIN 53018, verstanden.

Das Verdünnungsmittel (b) wird üblicherweise in einer Menge von 5 bis 40, bevorzugt von 10 bis 30, bezogen auf das Gesamtgewicht des 1-Komponenten-Polyurethanschaumsystems, verwendet. Das Verdünnungsmittel (b) wird bevorzugt vor der Umsetzung mit dem Isocyanat (iv) der erfindungsgemäßen Polyolzusammensetzung zugegeben.

Als Flüssiggase (c) sind im allgemeinen Flüssigkeiten mit einem Siedepunkt kleiner 40°C geeignet. Bevorzugt werden Dimethylether, Tetrafluormethan (R134a), Difluorethan (R152a) sowie technische Gemische aus Propan und Butan als Flüssiggase verwendet.

Das Flüssiggas oder Flüssiggasgemisch (c) wird üblicherweise in einer Menge von 12 bis 40 Gew.-%, bevorzugt von 18 bis 30 Gew.-%, bezogen auf das Gesamtgewicht des 1-Komponenten-Polyurethanschaumsystems, verwendet.

In einer bevorzugten Ausführungsform handelt es sich bei dem Druckbehälter um eine Dose, bevorzugt mit 0,1 bis 3 Litern Füllvolumen, die über eine Vorrichtung verfügt, über die das 1-Komponentenschaumsystem ausgetragen werden kann.

Zur Herstellung des erfindungsgemäßen Druckbehälters werden das erfindungsgemäße Isocyanatprepolymer oder alternativ die Einzelkomponenten aus Polyolzusammensetzung und monomerarmen PMDI, sowie gegebenenfalls Zusatzstoffe und Verdünnungsmittel, einzeln oder als Mischung über eine geeignete Dosieranlage in einem gewünschten Verhältnis in Druckbehälter, beispielsweise Aerosoldosen gefüllt. Die so mit dem Reaktionsgemisch gefüllten Behälter können eine Verschlusseinrichtung durchlaufen, wobei die Behälter mit Ventilen zum Austragen der Einkomponentenmischung versehen und anschließend mit Flüssiggas als Treibmittel aufgefüllt werden. In einer Taumel- oder Schüttelanlage werden gegebenenfalls anschließend die Komponenten miteinander vermischt.

Schließlich ist Gegenstand der Erfindung ein Polyurethanschaumstoff, erhältlich durch Austrag des vorstehend beschriebenen 1-Komponenten-Polyurethanschaumsystems aus einem vorstehend beschriebenen Druckbehälter und anschließender Reaktion mit Luftfeuchte.

Die erfindungsgemäßen Schaumstoffe sind Polyisocyanat-Polyadditionsprodukte, bevorzugt Polyurethane, die gegebenenfalls Harnstoffstrukturen aufweisen können. Die Schaumstoffe weisen elastischere Eigenschaften auf, als Schaumstoffe bekannter Art auf der Basis von monomerarmen PMDI.

Die erfindungsgemäßen Schaumstoffe haben bevorzugt eine Bruchdehnung, gemessen nach DIN 53571, von größer 30 %, bevorzugt größer 40 % bis 60 %. Weiterhin weisen sie bevorzugt eine Druckspannung (bei 10 % Verformung) von kleiner 10 N/cm² auf, gemessen nach DIN 53421.

Die vorliegende Erfindung soll anhand der nachfolgenden Beispiele veranschaulicht werden.

### Beispiele

### A) Erfindungsgemäßes Beispiel

### 1. Polyolzusammensetzung:

Aus 366 g eines Polyetherpolyols auf Basis Glyzerin/Propylenoxyd/Ethylenoxyd Molekulargewicht 4000 g/mol, 200 g eines Polyetherpolyols auf Basis Glyzerin/Propylenoxyd/Ethylenoxyd Molekulargewicht 6200 g/mol, 25 g eines Polyesterpolyols auf Basis Dicarbonsäuregemisch / Monoethylenglykol Molekulargewicht 1800 g/mol, 300 g Trichlorpropylphosphat, 25 g Schaumstabilisator sowie 10 g Dimorpholinodiethylether wurde ein Gemisch hergestellt.
Zu diesem Gemisch wurden 50 g eines NCO-Prepolymeren (= Komponente (ii)), hergestellt aus Gemisch von 52 Gew.-% Diphenylmethandiisocyanat (Gemisch der 2,4- und 4,4-Isomeren) und 48 Gew.-% eines Polyesterpolyols auf Basis Dicarbonsäuregemisch / Monoethylenglykol Molekulargewicht 1800 g/mol, unter Rühren zugegeben. Nach ca. 30 min war die Urethanmodifizierung des Polyolgemisches abgeschlossen. Durch Zugabe von weiteren 30 g Diacetonalkohol unter Rühren wurde die Polyolzusammensetzung vervollständigt.

### 2. Isocyanatkomponente (monomerarmes PMDI):

Aus 780 g entmonomerisierten Polymer-MDI (mit einem Restgehalt von 0,2 Gew.-% monomeres MDI), 130 g Trichlorpropylphosphat und 90 g Triethylphosphat wurde ein Gemisch hergestellt.

### 3. Isocyanatprepolymer in Aerosoldose:

In eine 1-Liter-Aerosoldose wurden 228 g der Polyolkomponente nach Punkt 1 und 377 g der Isocyanatkomponente nach Punkt 2 eingefüllt. Die Aerosoldose wurde mit einem Ventil verschlossen. Durch das Ventil wurden nacheinander 59 g Dimethylether, 36 g eines technischen Propan/ Butan-Gemisches und schließlich 107 g Tetrafluorethan dosiert. Das in der Aerosoldose befindliche Gemisch wurde durch intensives Schütteln homogenisiert. Die einsetzende Polyurethanreaktion führte zu dem erfindungsgemäßen Isocyanatprepolymer. Die Reaktion war durch Lagerung der Aerosoldose bei ca. 45-50°C nach ca. 24h beendet.

### 4. Geschäumter Schaumstoff:

Nach Wärmelagerung der nach Punkt3 beschriebenen Aerosoldose und deren Abkühlung auf Raumtemperatur war das 1-Komponenten-Polyurethanschaumsystem fertig und testbar.
Zu diesem Zweck wurde das System durch die Ventilöffnung der Aerosoldose auf vorgefeuchtetes Papiervlies aufgetragen.
Das aufschäumende Gemisch härtete zu einem Schaumstoff mit folgenden Eigenschaften. (siehe Tabelle 1)

### B) Vergleichsbeispiel:

Es wurde in ähnlicher Weise wie im Ausführungsbeispiel beschrieben verfahren, wobei jedoch ein Polyolgemisch nach bekannter Formulierung ohne eine Urethanmodifizierung des Polyolgemisches (ohne Anwendung der erfinderischen Lösung) verwendet wurde.

### 1. Polyolzusammensetzung:

Aus 568 g eines Polyetherpolyols auf Basis Glyzerin/Propylenoxyd/Ethylenoxyd Molekulargewicht 4000 g/mol, 178 g eines Polyetherpolyols auf Basis Glyzerin/Propylenoxyd Molekulargewicht 1000 g/mol, 80 g eines bromierten Polyetherpolyols Molekulargewicht 500 g/mol, 80 g Polyethylenglykol Molekulargewicht 600, 25 g Schaumstabilisator, 8 g Dimorpholinodiethylether, 60 g Diacetonalkohol und 0,5 g eines Silikonöl wurde die Polyolkomponente hergestellt.
Diese Polyolzusammensetzung enthielt somit im Gegensatz zur erfindungsgemäßen Polyolzusammensetzung keine "OH-Prepolymere".

### 2. Isocyanatkomponente (monomerarmes PMDI):

Aus 780 g entmonomerisierten Polymer-MDI (mit einem Restgehalt von 0,2 Gew.-% monomeres MDI), 130 g Trichlorpropylphosphat und 90 g Triethylphosphat wurde ein Gemisch hergestellt.

### 3. Isocyanatprepolymer in Aerosoldose:

In eine 1 Liter-Aerosoldose wurden 161 g der Polyolkomponente und 444 g der Isocyanatkomponente eingefüllt. Die Aerosoldose wurde mit einem Ventil verschlossen. Durch das Ventil wurden nacheinander 59 g Dimethylether, 36 g eines technischen Propan/ Butan-Gemisches und schließlich 107 g Tetrafluorethan dosiert.
Das in der Aerosoldose befindliche Gemisch wurde durch intensives Schütteln homogenisiert. Die einsetzende Polyurethanreaktion führte zu einem nicht erfindungsgemäßen Isocyanatprepolymer. Die Reaktion war durch Lagerung der Aerosoldose bei ca. 45-50°C nach ca. 24 h beendet.

### 4. Schaumstoff:

Nach Wärmelagerung der nach Punkt 3 beschriebenen Aerosoldose und deren Abkühlung auf Raumtemperatur war das 1-Komponenten-Polyurethanschaumsystem fertig und testbar.
Zu diesem Zweck wurde das System durch die Ventilöffnung der Aerosoldose auf vorgefeuchtetes Papiervlies aufgetragen.
Das aufschäumende Gemisch härtete zu einem Schaumstoff mit folgenden Eigenschaften. (siehe Tabelle 1)

**Tabelle 1:**

| mechanische Eigenschaften | Schaumstoff nach erfindungsgemäßen Beispiel | Schaumstoff nach Vergleichsbeispiel |
|---|---|---|
| Zugfestigkeit | 36 N/cm² | 45 N/cm² |
| Bruchdehnung | 56 % | 26 % |
| Druckspannung nach 10 % Verformung | 8 N/cm² | 22 N/cm² |

Der Vergleich der Druckspannungswerte zeigte eine deutlich höhere Elastizität des gemäß der vorliegenden Erfindung hergestellten Schaumstoffs.

## Patentansprüche

1. Isocyanatprepolymer, erhältlich durch Umsetzung einer Polyolzusammensetzung, herstellbar durch Umsetzung von
(i) einer Polyolkomponente mit
(ii) Polyisocyanaten, bevorzugt Diisocyanaten,
wobei bei dieser Umsetzung das Verhältnis von Hydroxygruppen der Komponente (i) zu Isocyanatgruppen der Komponente (ii) mehr als 2 zu 1 beträgt, mit Polyisocyanaten (iv), **dadurch gekennzeichnet, dass** es sich bei den Polyisocyanaten um monomerarmes PMDI (iv) mit einem 2-Kern-Gehalt von weniger als 1,0 Gew.-%, bezogen auf das Gesamtgewicht des PMDIs, handelt.

2. Isocyanatprepolymer nach Anspruch 1, **dadurch gekennzeichnet, dass** das monomerarme PMDI (iv) einen 2-Kern-Gehalt von weniger als 0.5 Gew.-%, bezogen auf das Gesamtgewicht des PMDIs, aufweist.

3. Isocyanatprepolymer nach Anspruch 1 oder 2, **dadurch gekennzeichnet, dass** das Polyisocyanat (iv) eine Funktionalität von 3 bis 5 aufweist.

4. Isocyanatprepolymer nach Anspruch 1 bis 3, **dadurch gekennzeichnet, dass** die Komponente (i) die Bestandteile
(i-a) Polyetherpolyole und
(i-b) Polyesterpolyole enthält.

5. Isocyanatprepolymer nach Anspruch 1 bis 4, **dadurch gekennzeichnet, dass** nach Abschluss der Umsetzung der Polyolkomponente (i) mit den Polyisocyanaten (ii) Kettenregler (iii) als weiterer Bestandteil zugefügt werden.

6. Isocyanatprepolymer nach einem der Ansprüche 1 bis 5, **dadurch gekennzeichnet, dass** die Polyolzusammensetzung eine Viskosität nach DIN 53018 von 1000 bis 20000 mPas, gemessen bei 25°C, aufweist.

7. Verfahren zur Herstellung eines Isocyanatprepolymers durch Vermischen einer Polyolzusammensetzung, erhältlich durch Umsetzung von
(i) einer Polyolkomponente mit
(ii) Polyisocyanaten, bevorzugt Diisocyanaten,
wobei bei dieser Umsetzung das Verhältnis von Hydroxygruppen der Komponente (i) zu Isocyanatgruppen der Komponente (ii) mehr als 2 zu 1 beträgt, mit Polyisocyanaten (iv), **dadurch gekennzeichnet, dass** es sich bei den Polyisocyanaten (iv) um monomerarmes PMDI (iv) mit einem 2-Kern-Gehalt von weniger als 1,0 Gew.-%, bezogen auf das Gesamtgewicht des PMDIs, handelt.

8. Verwendung eines Isocyanatprepolymers nach einem der Ansprüche 1 bis 6 zur Herstellung eines 1-Komponenten-Polyurethanschaumsystems.

9. Druckbehälter, enthaltend ein 1-Komponentenschaumsystems, das
(a) Isocyanatprepolymere nach einem der Ansprüche 1 bis 6 und gegebenenfalls
(b) Verdünnungsmittel und/oder
(c) Flüssiggas, enthält.

10. Druckbehälter nach Anspruch 9, **dadurch gekennzeichnet, dass** der Druckbehälter eine Dose mit 0,1 bis 3 Litern Füllvolumen ist, die über eine Vorrichtung verfügt, über die das 1-Komponentenschaumsystem ausgetragen werden kann.

11. Polyurethanschaumstoff, erhältlich durch Austrag eines 1-Komponentenschaumsystems aus einem Druckbehälter nach Anspruch 9 oder 10 und anschließender Umsetzung mit Luftfeuchte.

## Claims

1. An isocyanate prepolymer obtainable by reacting a polyol composition preparable by reacting
(i) a polyol component with
(ii) polyisocyanates, preferably diisocyanates,
the ratio of hydroxyl groups of component (i) to isocyanate groups of component (ii) in this reaction being more than 2 to 1, with polyisocyanates (iv), wherein the polyisocyanates are low-monomer PMDI (iv) having a 2-ring content of less than 1.0% by weight, based on the total weight of the PMDI.

2. The isocyanate prepolymer according to claim 1, wherein the low-monomer PMDI (iv) has a 2-ring content of less than 0.5% by weight, based on the total weight of the PMDI.

3. The isocyanate prepolymer according to claim 1 or 2, wherein the polyisocyanate (iv) has a functionality of from 3 to 5.

4. The isocyanate prepolymer according to claims 1 to 3, wherein component (i) comprises the constituents
(i-a) polyether polyols and
(i-b) polyester polyols.

5. The isocyanate prepolymer according to claims 1 to 4, wherein, on completion of the reaction of the polyol component (i) with the polyisocyanates (ii), chain regulators (iii) are added as a further constituent.

6. The isocyanate prepolymer according to any of claims 1 to 5, which has a viscosity to DIN 53018 of from 1000 to 20 000 mPas, measured at 25°C.

7. A process for preparing an isocyanate prepolymer by mixing a polyol composition obtainable by reacting
(i) a polyol component with
(ii) polyisocyanates, preferably diisocyanates,
the ratio of hydroxyl groups of component (i) to isocyanate groups of component
(ii) in this reaction being more than 2 to 1,
with polyisocyanates (iv), wherein the polyisocyanates (iv) are low-monomer PMDI (iv) having a 2-ring content of less than 1.0% by weight, based on the total weight of the PMDI.

8. The use of the isocyanate prepolymer according to any of claims 1 to 6 for preparing a 1-component polyurethane foam system.

9. A pressure vessel comprising a 1-component foam system which comprises
(a) isocyanate prepolymers according to any of claims 1 to 6 and, if appropriate,
(b) diluents and/or
(c) liquefied gas.

10. The pressure vessel according to claim 9, which is a can which has a capacity of from 0.1 to 3 liters and has a device through which the 1-component foam system can be discharged.

11. A polyurethane foam obtainable by discharge of a 1-component foam system from the pressure vessel according to claim 9 or 10 and subsequent reaction with atmospheric moisture.

## Revendications

1. Prépolymère d'isocyanate, pouvant être obtenu par réaction d'une composition de polyol, pouvant être fabriquée par réaction de
(i) un composant de polyol avec
(ii) des polyisocyanates, de préférence des diisocyanates,
le rapport entre les groupes hydroxy du composant (i) et les groupes isocyanates du composant (ii) étant supérieur à 2 sur 1 lors de cette réaction, avec des polyisocyanates (iv), **caractérisé en ce que** les polyisocyanates sont du PMDI pauvre en monomère (iv) ayant une teneur en composé binucléaire inférieure à 1,0 % en poids, par rapport au poids total du PMDI.

2. Prépolymère d'isocyanate selon la revendication 1, **caractérisé en ce que** le PMDI pauvre en monomère (iv) présente une teneur en composé binucléaire inférieure à 0,5 % en poids, par rapport au poids total du PMDI.

3. Prépolymère d'isocyanate selon la revendication 1 ou 2, **caractérisé en ce que** le polyisocyanate (iv) présente une fonctionnalité de 3 à 5.

4. Prépolymère d'isocyanate selon la revendication 1 à 3, **caractérisé en ce que** le composant (i) contient les constituants
(i-a) polyéther polyols et
(i-b) polyester polyols.

5. Prépolymère d'isocyanate selon la revendication 1 à 4, **caractérisé en ce qu'**après l'achèvement de la réaction du composant de polyol (i) avec les polyisocyanates (ii), des régulateurs de chaînes (iii) sont introduits en tant que constituant supplémentaire.

6. Prépolymère d'isocyanate selon l'une quelconque des revendications 1 à 5, **caractérisé en ce que** la composition de polyol présente une viscosité selon DIN 53018 de 1 000 à 20 000 mPas, mesurée à 25 °C.

7. Procédé de fabrication d'un prépolymère d'isocyanate par mélange d'une composition de polyol, pouvant être obtenue par réaction de
(i) un composant de polyol avec
(ii) des polyisocyanates, de préférence des diisocyanates,
le rapport entre les groupes hydroxy du composant (i) et les groupes isocyanates du composant (ii) étant supérieur à 2 sur 1 lors de cette réaction, avec des polyisocyanates (iv), **caractérisé en ce que** les polyisocyanates (iv) sont du PMDI pauvre en monomère (iv) ayant une teneur en composé binucléaire inférieure à 1,0 % en poids, par rapport au poids total du PMDI.

8. Utilisation d'un prépolymère d'isocyanate selon l'une quelconque des revendications 1 à 6 pour la fabrication d'un système de mousse de polyuréthanne à 1 composant.

9. Contenant sous pression, contenant un système de mousse à 1 composant, qui contient
(a) des prépolymères d'isocyanate selon l'une quelconque des revendications 1 à 6 et
(b) des diluants et/ou
(c) du gaz liquéfié.

10. Contenant sous pression selon la revendication 9, **caractérisé en ce que** le contenant sous pression est une boîte d'un volume de remplissage de 0,1 à 3 litres, qui est munie d'un dispositif par lequel le système de mousse à 1 composant peut être distribué.

11. Mousse de polyuréthanne, pouvant être obtenue par distribution d'un système de mousse à 1 composant à partir d'un contenant sous pression selon la revendication 9 ou 10 et réaction ultérieure avec l'humidité de l'air.
